# EUROPEAN PATENT APPLICATION

(11) **EP 1 134 972 A2**
(43) Date of publication of application: **19.09.2001**
(21) Application number: 01102119.3
(22) Date of filing: 31.01.2001
(51) Int. Cl.: H04N 5/445

(54) **Parental control and monitoring system and method**

(30) Priority: 17.03.2000 US 527339
(71) Applicant: MATSUSHITA ELECTRIC INDUSTRIAL CO., LTD., Kadoma-shi, Osaka 571-8501 (JP)
(72) Inventor: Kahn, Michael, West Ampton, NJ 08060 (US)
(74) Representative: Schwabe - Sandmair - Marx

(57) **Abstract**

A system and method for controlling and monitoring television usage is presented. The system includes a tuner (104) for receiving and demodulating a digital television signal (102), a video processor (106) coupled to the tuner (104) for receiving the demodulated television signal from the tuner, an interface circuit (108) for receiving a command signal from a user, and a controller (110) for controlling the tuner (104), video processor (106), and interface circuit (108). The controller (110) controls the video processor (106) based on the usage of the television in response to command signals sent by the user and predetermined criteria setup by a system administrator.

## Description

### FIELD OF THE INVENTION

The present invention relates to the field of digital television systems. More specifically, the present invention relates to an apparatus and method to control and monitor a viewer's television usage.

### BACKGROUND OF THE INVENTION

Over the years, parents have been faced with the ever difficult task of overseeing the television viewing habits and activities of their children. Unrestricted access to television draws children away from their schoolwork and other activities, such as family activities, sports or other recreation.

Presently, systems are available for only preventing children from watching programs that contain violence or other explicit content. Such a system is known by the term "v-chip" and is provided in most newer television sets on the market. Despite the advent of the "v-chip", parents are still faced with the task of preventing or limiting television activity of their children. Conventional systems do not control the amount of time a child spends in front of the television or the time periods that a child is able to use the television. Such control is presently available only by direct oversight by the parent.

With the increased demands on parents, and in view of the deficiencies of conventional systems, it would be desirable to have a system that allows parents to limit or prevent television viewing without the necessity of being present during television use by their children. It would also be desirable to control recording of programs so even if an older child or an adult is allowed to record a "violent" program, a younger child normally denied access to such content, is prevented from viewing that program at another time.

### SUMMARY OF THE INVENTION

The present invention is embodied in a system and method for controlling and monitoring television usage. The system includes a tuner for receiving and demodulating a digital television signal, a video processor coupled to the tuner for receiving the demodulated television signal from the tuner, an interface circuit for receiving a command signal from a user, and a controller for controlling the tuner, video processor, and interface circuit. The controller controls the video processor based on the usage of the television in response to command signals sent by the user and predetermined criteria setup by a system administrator.

According to one aspect of the invention, a non-removable recording media records the demodulated digital television signal.

According to a further aspect of the invention, the non-removable recording media is connected to the system by a global communication network.

According to yet another aspect of the invention, the user sends commands to the system through a wireless interface.

According to another aspect of the invention, the controller includes a v-chip.

According to yet another aspect of the invention, a viewing profile and a viewing summary are displayed for each user listing various viewing attributes assigned to each user.

According to another aspect of the invention, the user is prohibited from viewing if the user exceeds any of the various viewing attributes.

According to a method of the invention, for each user an account is established and includes a time limit for television viewing. An elapsed viewing time is determining for the user and television usage is prohibiting if the elapsed viewing time exceeds the time limit.

According to a further aspect of the invention, a program guide is provided where colors are assigned to programs that exceed a rating privilege of the viewer.

According to a yet another aspect of the invention, each user has an account established by a system administrator and assigned a password.

According to another aspect of the invention, viewing is prohibited if the correct password is not entered by the user.

According to another aspect of the invention, the password is a biometric identifier.

### BRIEF DESCRIPTION OF THE DRAWINGS

The invention is best understood from the following detailed description when read in connection with the accompanying drawings. Included in the drawings are the following figures:
Figure 1 is a block diagram of the system according to a first exemplary embodiment of the present invention;
Figure 2 is a block diagram of the system according to a second exemplary embodiment of the present invention;
Figure 3 is a login screen according to an exemplary embodiment of the present invention;
Figure 4 is a viewing profile screen according to an exemplary embodiment of the present invention;
Figure 5 is a viewing details screen according to an exemplary embodiment of the present invention;
Figure 6 is a flow chart of an account setup process according to the present invention;
Figure 7 is a flow chart of a user authorization process according to the present invention;
Figure 8 is a block diagram of the system according to a third exemplary embodiment of the present invention;
Figure 9 is an exemplary account setup screen for creating a new user account according to an exemplary embodiment of the present invention; and
Figure 10 is a viewing details screen according to another exemplary embodiment of the present invention.

### DETAILED DESCRIPTION OF THE EXEMPLARY EMBODIMENT

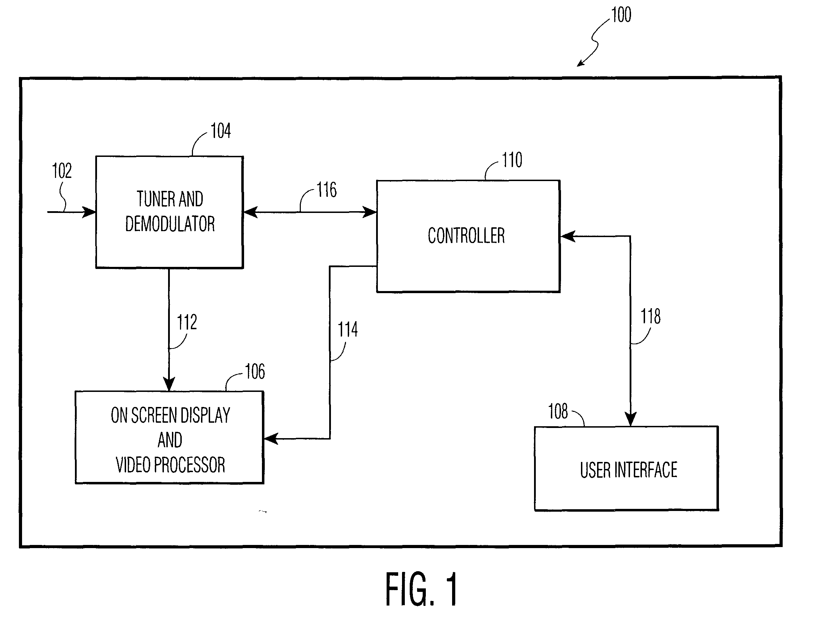

Referring to Figure 1, a block diagram of the control and monitoring system 100 according to a first exemplary embodiment of the present invention is shown.

In Figure 1, system 100 includes Tuner and Demodulator 104, Controller 110, On Screen Display (OSD) and Video Processor 106 and User Interface 108. The Controller 110 is coupled to a) the Tuner and Demodulator 104 through signal line 116, b) User Interface 108 through signal line 118, and c) OSD/Video Processor 106 through signal line 114.

In the exemplary embodiment of the invention, a digital or analog television signal 102 is input to Tuner and Demodulator 104 and demodulated. The demodulated television signal 112 is provided to OSD/television signal processor 106 under control of Controller 110. The user provides command signals to the Controller 110 through User Interface 108. It is contemplated that the User Interface 108 may include a wireless interface, such as infrared (IR) or radio frequency (RF). Through User Interface 108, the user may select programs for viewing. It is contemplated that system 100 may be an integrated receiver/decoder (IRD) contained within a television (not shown) or part of a Set Top Box containing additional circuitry, such as an Digital Television (DTV) or High Definition Television (HDTV) Decoder. The OSD/television signal processor may be a conventional analog television signal processing system including both audio and video components, coupled to a conventional on-screen (OSD) display processor.

The Controller 110, controls the flow of video information from Tuner/Demodulator 104 to OSD/Video Processor 106 based on certain criteria established by a system administrator. It is contemplated that the system administrator will be a parent or other authority figure and the user will be one or more children or subordinate users. According to the exemplary embodiment of the present invention, the administrator is able establish various viewing criteria such as total viewing time, prohibited viewing time slots, prohibited channels, and prohibited program ratings, to name a few. In essence, the present invention allows parents to electronically enforce proper viewing habits for their children without the necessity of constant direct supervision.

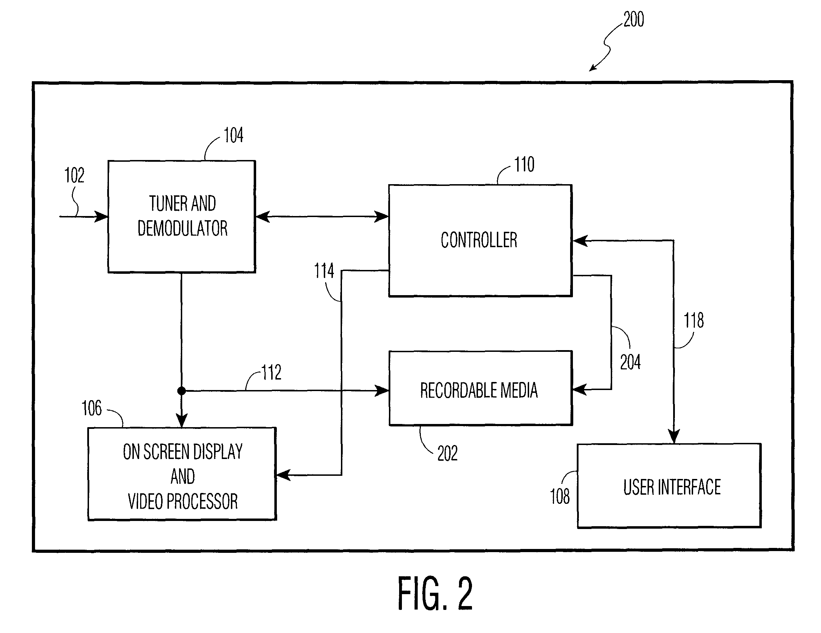

Referring to Figure 2, a block diagram of the control and monitoring system 200 according to a second exemplary embodiment of the present invention is shown. In Figure 2, the second embodiment is similar to the embodiment of Figure 1 with the addition of recordable media 202 coupled to the controller 110 and Tuner/Demodulator 104.

In the embodiment of Figure 2, the recordable media 202 receives and records video information from Tuner/decoder 104 through signal line 112. Recording of the video information is conducted in accordance with control signals received from Controller 110 through signal line 204. Controller 110 also controls playback of video information by providing the video information to OSD/Video processor 106 through signal line 112 for ultimate display on the television display device. Recordable medium 202 may be a non-removable medium such as a magnetic disk, optical disk or semiconductor memory. The video information may be recorded in a compressed state using any of several compression standards, such as the MPEG standard, in order to maximize the storage capacity of the recording media. The compression/decompression of the video information may be part of the recordable media or included in other circuitry within system 200. One exemplary system that records television programs on a hard disk drive is the Replay TV™ system available from Replay Networks, Inc.

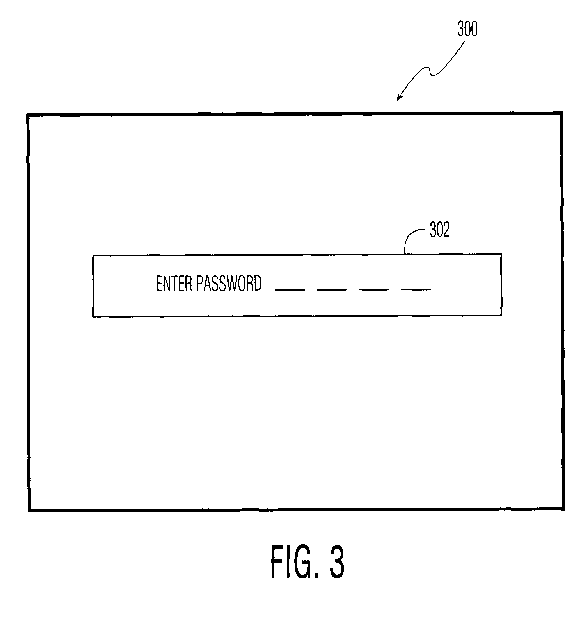

Figure 3, is an exemplary password entry screen 300 according to the present invention. As shown in Figure 3, all users are required to enter a password 302 before viewing is permitted. The user may enter the password through a remote control (not shown) coupled to the user interface or a front panel control (not shown) of the system, for example. In its simplest form, it is contemplated that numeric symbols may be used as passwords, although alphanumeric characters may also be used depending on the type of the remote control unit used. In the exemplary embodiment, a four-character password is illustrated, although the number of characters may be changed as necessary. To this end, it is contemplated that the system administrator may establish longer passwords for certain users depending on the skill level of those that the administrator is attempting to thwart.

Furthermore, it is contemplated that other security maeasures may be used instead of or in addition to the password. For example, each viewer may be required to provide a biometric identifier such as a fingerprint or a spoken word as a password. The biometric may be entered using, for example, a fingerprint reader (not shown) on the IRD or set-top box or a fingerprint reader (not shown) or microphone (not shown) on the remote control device.

Although a password scheme is described above, the invention is not so limited. It is also contemplated that other means for accessing the system may be used, such as a "smart card" or other type of access key.

To prevent unscrupulous users from reconfiguring user parameters, a password (or other authentication means, such as a "smart card") is also contemplated for use by the system administrator. The password for the system administrator may require a larger number of numeric or alphanumeric characters than an ordinary user. It is contemplated that there may be more than one system administrator, such as a mother and father, each having separate passwords (or keys), if desired, and having equal control over user viewing parameters.

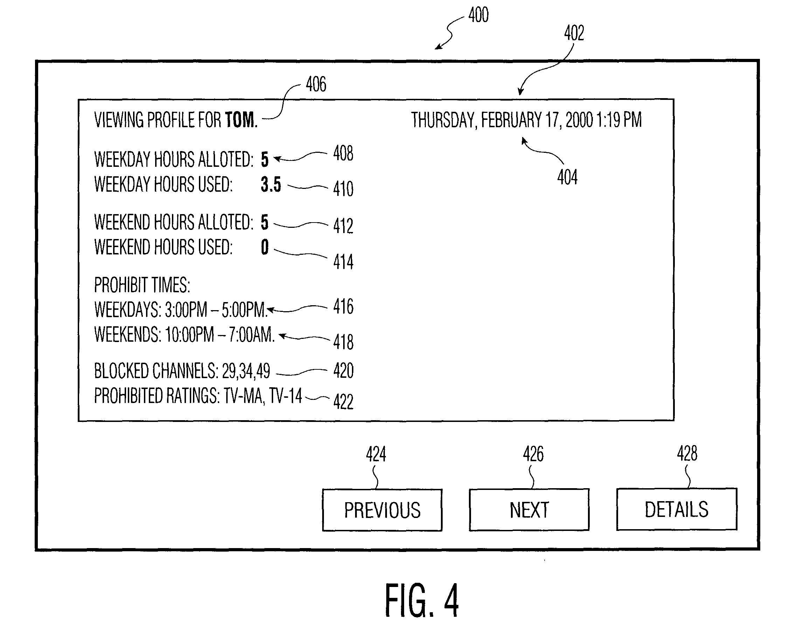

Referring now to Figure 4, a profile screen 400 for an exemplary user is shown. Profile screen 400 provides the administrator with a high level overview of the viewing activity of a user, as well as various viewing parameters assigned to the user. The system administrator may access profile screen 400 after entry of the administrative password if desired. Optionally, the user may also be able to view his/her profile in order to determine remaining time available as a way of self regulation, for example. This feature may be enabled or disabled by the system administrator as desired.

In Figure 4, screen 400 includes a detailed profile 402 and action keys 424, 426 and 428. The action keys may be selected by either scrolling through the action keys or by selecting predefined keys on the remote control or control panel. Each established user will have a respective profile assigned. The system administrator may scroll between profiles by selecting action key 426 to display the next profile or action key 424 to display the previous profile. Scrolling past the last (or first) user profile will take the administrator to the first (or last) user profile.

As shown in Figure 4, viewer profile 402 contains a variety of information relating to the viewing parameters of a user. The profile may contain a line 406 dedicated to the title of the screen, in this case "VIEWING PROFILE FOR TOM." Optional Line 404 may list the current date and time. Line 408 lists the current weekday hour allotment for Tom and line 410 lists the total elapsed time used by Tom thus far for the current week. As educational demands on children normally decrease on the weekend, it is contemplated that weekend allotments may be separately provided. To that end, lines 412 and 414 may be provided listing the total weekend hour allotment and elapsed usage, respectively.

Viewer profile 402 may also include prohibited viewing time entries 416 and 418 for weekdays and weekends, respectively. In addition, blocked channel entry 420 and prohibited rating entry 422 may be included. It is contemplated that the system administrator may use Screen 400 to edit viewer parameters such as Weekday Hours Allotted 408, Weekend Hours Allotted 412, Prohibited Times 416, 418, Blocked Channels 420 and Prohibited Ratings 422 after a user account is established.

With respect to program ratings, for digital television programs, it is contemplated that the system implements the standards set forth in EIA Standard 766 (EIA-766), U.S. Region Rating Table "RRT" and Content Advisory Descriptor for Transport of Content Advisory Information Using ATSC A/65 Program and System Information Protocol (PSIP), and Advanced Television Systems Committee Document A/65, Program and System Information Protocol for Terrestrial Broadcast and Cable. For analog television programs, it is contemplated that the system implements the standards set forth in the standards EIA-608, Recommended Protocol for Line 21 Data Service and EIA-744 Transport of Control Advisory Information Using Extended Data Service. Each of these documents are specifically incorporated herein by reference. The system may also use other rating systems, for example the rating system established by the Motion Picture Association of America (MPAA) for televised films that are received by the television receiver. The MPAA rating for a film may not be transmitted with the video signal and may need to be obtained, for example, from the database of an electronic program guide (EPG) such as Starsight™.

Referring again to Figure 4, the system administrator may scroll through the various available input fields for parameters 408, 412, 416, 418, 420 and 422, and provide a desired parameter either directly, using numeric keys, or by scrolling through parameter options such as time allotments, channel numbers, program ratings, etc.

It is also contemplated that the system administrator may user an EPG (not shown) to indicate upcoming programs that exceed the rating parameter for a user. To this end, the software for the program guide in the television receiver may be modified to assign color attributes to the program listing so that it is easier for a system administrator to identify time periods in which a viewer will not be permitted to watch television. The EPG may be modified, for example, to show as red, programs having an R or TV-M rating when the user has a rating parameter of TV-PG. Other colors or the same color may be assigned to all such programs exceeding the user's rating parameter. When Screen 400 is used for entry of viewer parameters, it is desirable that the password protection described above be invoked.

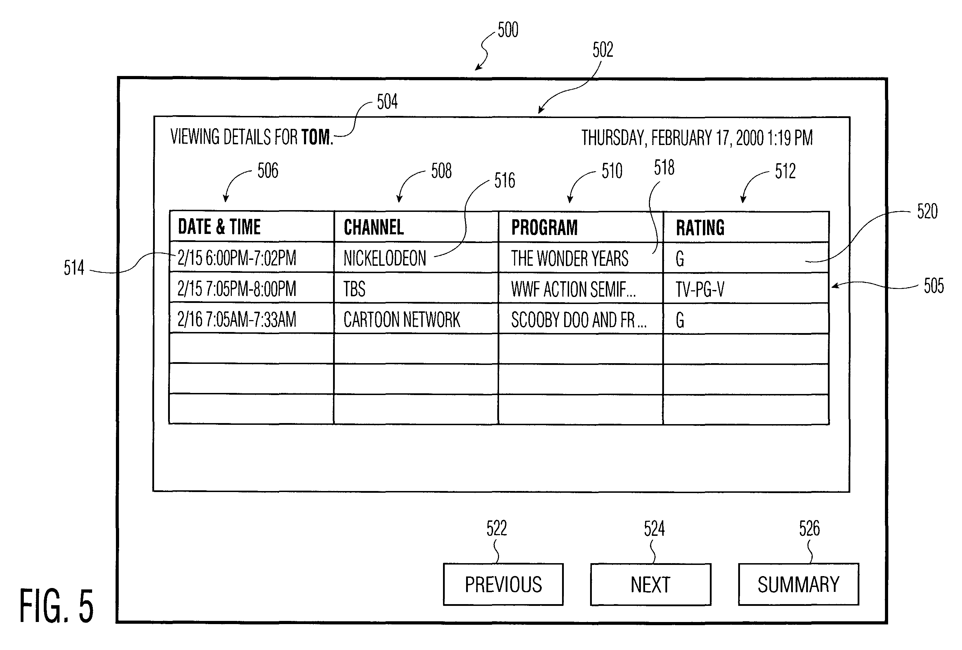

Selection of action key 428 allows the system administrator to display the viewing details of the currently selected user. Referring now to Figure 5, screen 500 lists the viewing details 502 for our current user "Tom." Screen 500 may contain a line 504 dedicated to the title of the screen, in this case "VIEWING DETAILS FOR TOM." In the exemplary embodiment, a four column table 505 is used to indicate DATE & TIME 506, CHANNEL 508, PROGRAM 510, and RATING 512, of the programs viewed by Tom over a period of time. The list is not so restricted and may include additional columns such as recording status, etc.

It is contemplated that the time period covered by the viewing detail 502 may begin on a Monday and end the following Sunday, for example, although other time periods may be selected as desired. At the end of the current week, the viewing details may be stored or deleted by the system administrator as desired, either manually or automatically. It is also contemplated that if the viewing details exceed the length of the table displayed on screen 500, the administrator may view further screens associated with the current user by selecting action key 524 to scroll to the remaining entries for the current user. In a similar manner, action key 522 may be used to scroll to earlier pages of the current viewer.

As shown in Figure 5, table 505 lists the Date & Time 514, Channel 516, Program title 518 and Rating 520 of an exemplary program as well as other programs viewed by the current user. It is contemplated that in order to avoid overflow of the table 505, "channel surfing" will not create entries in table 505. An entry will be registered in table 505 once the viewer remains at a channel for a predetermined period of time, such as 5 or 10 minutes for example. In this way a viewer may switch between channels during a commercial break without creating additional entries into table 505. It is contemplated, however, that the time spent surfing is deducted from the viewer's time budget.

Once the system administrator is finished reviewing the detail screen 500, the administrator may return to the summary screen of the current user by selecting action key 526. Action keys 522, 524 may also be used to scroll to the viewing detail screens for other users, if desired. It is contemplated that scrolling past the last detail screen for a particular user will display the first detail screen for a further user. Similarly, scrolling backwards past the first detail screen of a user will display the last detail screen of the previous user.

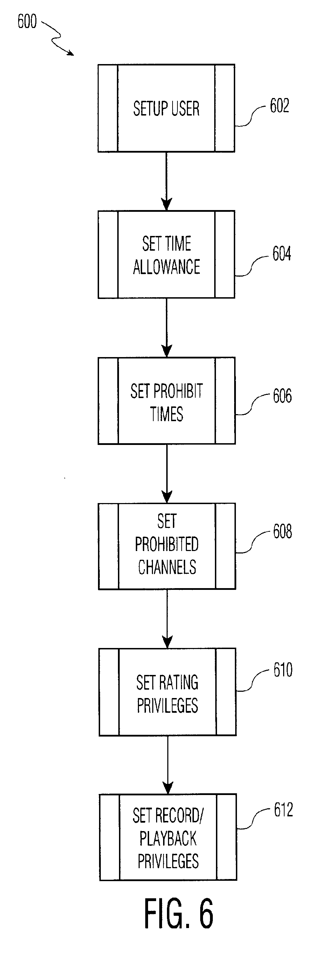

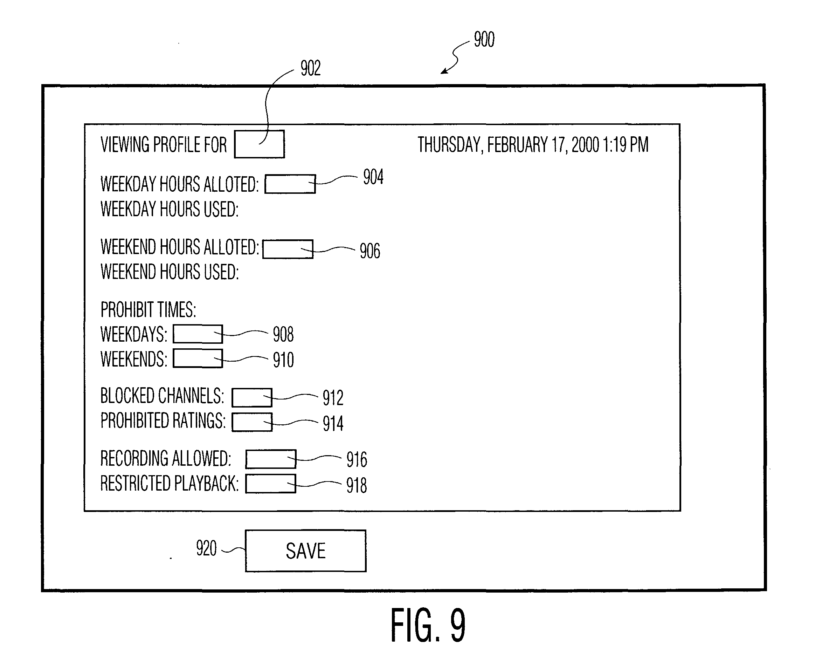

Referring now to Figures 6 and 9, a flowchart 600 for setting user parameters and an exemplary setup screen 900, respectively, are shown. In Figure 6, at Step 602, the system administrator creates a new user profile (initially) or reenters an existing user profile. When creating a new user profile setup screen 900 (shown in Figure 9) is provided to the system administrator. As shown in Figure 9, part of the setup at Step 602 may include a location 902 for entry of the user's name or other identifier. At Step 604, time allotments for weekdays and/or weekends may be assigned as entries 904 and 906, respectively. At Step 606, prohibited times for weekday and/or weekend viewing may be assigned as entries 908 and 910, respectively. At Step 608, prohibited channels may be provided as entry 912. At Step 610, prohibited program ratings may be provided as entry 914. For systems having recording capability, at Step 612, recording and/or playback privileges may be established as entries 916 and 918, respectively. When the administrator is satisfied with the entries, the profile may be saved by selecting action key 920. It is contemplated that the parameters and profiles for the users are stored in a non-volatile memory, such as a semiconductor memory, of the IRD.

As shown in Figure 9, each of the entries includes only a relatively small box in which the data may be entered. Some entries, for example, blocked channels and prohibited ratings may have more than one item. For example, a child may be blocked from watching channels 89-92 and 101. This data may be entered in list format into the space 912 for prohibited channels. When a viewer attempts to access one of these channels, the controller 110 searches the list to determine if the desired channel is in the list. If it is, the viewer is prevented from watching any program on that channel.

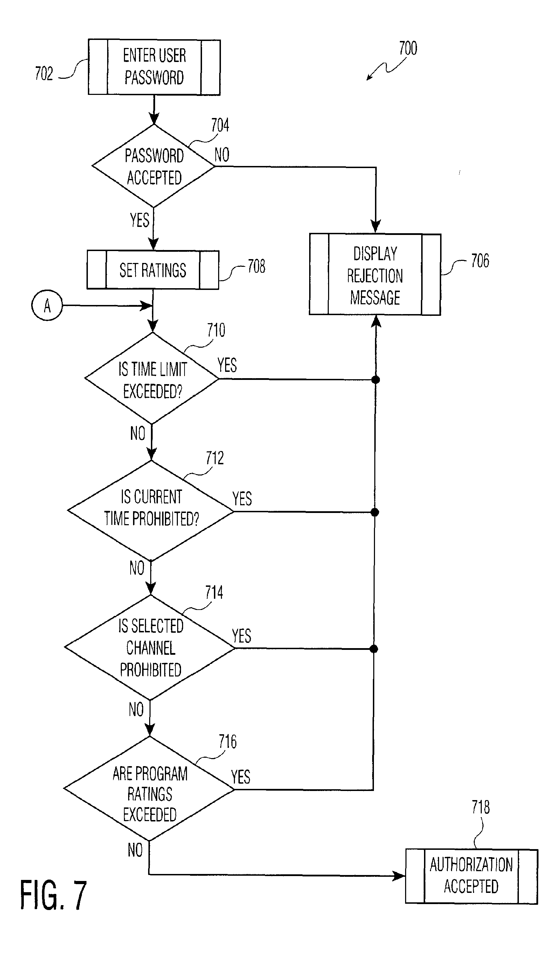

Referring now to Figure 7, a flowchart 700 for the exemplary process is shown. At Step 702, the user enters his/her password using screen 300 (shown in Figure 3). At Step 704, the password entered at Step 702 is compared with stored passwords assigned to the group of users. If the entered password does not match any of the stored passwords Step 706 is entered and a rejection message is displayed on the television. The rejection message may either be preset or customized by the system administrator for any or all users. If the password matches one of the stored passwords the user is recognized and Step 708 is entered. At Step 708, the user parameters associated with the password are retrieved. At Step 710, the elapsed time for the current group of days (weekdays or weekend) is compared to the applicable time allotment. If the elapsed time exceeds the time allotment, the user is prohibited from viewing and Step 706 is entered displaying the rejection message, otherwise Step 712 is entered. At Step 712, the current time is compared to any prohibited time periods (entries 416 or 418 shown in Figure 4). If the current time is within a prohibited time, the user is prohibited from viewing and Step 706 is entered displaying the rejection message, otherwise Step 714 is entered. At Step 714, a comparison is made between the channel selected by the user and any blocked channel parameters (entry 420 shown in Figure 4). If the selected channel is one of the blocked channels the user is prohibited from viewing and Step 706 is entered displaying the rejection message, otherwise Step 716 is entered. At Step 716, a comparison is made between the rating of the program being provided on the selected channel with the Prohibited Rating parameter (entry 422 shown in Figure 4). If the rating of the program is one of the prohibited ratings the user is prohibited from viewing and Step 706 is entered displaying the rejection message, otherwise Step 718 is entered. At Step 718, the user has met all of the parameters required by the administrator and the user is able to watch and/or record the selected program.

It is also contemplated that, if during a viewing session, a viewing parameter is violated, such as a prohibited time period is entered, a further program has a prohibited rating, or a blocked channel is selected, further viewing will be prohibited and the rejection message will be displayed to the user. Steady-state monitoring may be, for example, interrupt driven and use a portion of the method shown in Figure 7. Exemplary interrupt events for the process may be a five-minute timer event and a channel change event. If either of these events is detected, the controller 110 enters the program shown in Figure 7 at entry point A and checks the various limits as described above. At every five-minute interrupt, the viewer's cumulative time for the period is incremented. After a channel change event, if the same program is being viewed for two consecutive five-minute timer interrupts, then it is presumed that the viewer is watching the program and an entry is made for the program in the viewer's log. For every additional five minute interrupt in which the television receiver is tuned to the same program, the log entry for the program is updated by adding five minutes to the time the viewer spent watching the program.

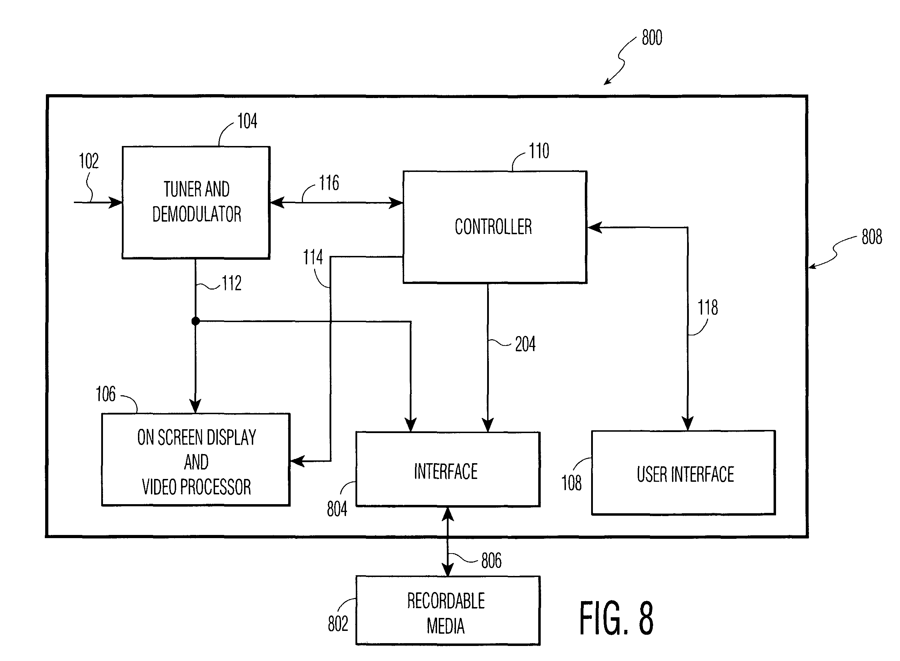

Referring to Figure 8, a block diagram of the control and monitoring system 800 according to a third exemplary embodiment of the present invention is shown. In Figure 8, the third embodiment is similar to the embodiment of Figure 1 with the addition of an interface 804 and remotely located recordable media 802 coupled to interface 804 of the IRD 808 through signal line 806. It is contemplated that the recordable media 802 may reside on a system, such as a server located at a remote site. It is also contemplated that the signal line 806 may be part of a global communication network or a local area network.

In the embodiment of Figure 8, the recordable media 802 receives and records video information from Tuner/decoder 104 through interface 804 and signal line 806. Recording of the video information is conducted in accordance with a control signal received from Controller 110 through signal line 204. Controller 110 also controls playback of video information provided to OSD/Video processor 106 through interface 804 and signal line 112 for ultimate display on the television.

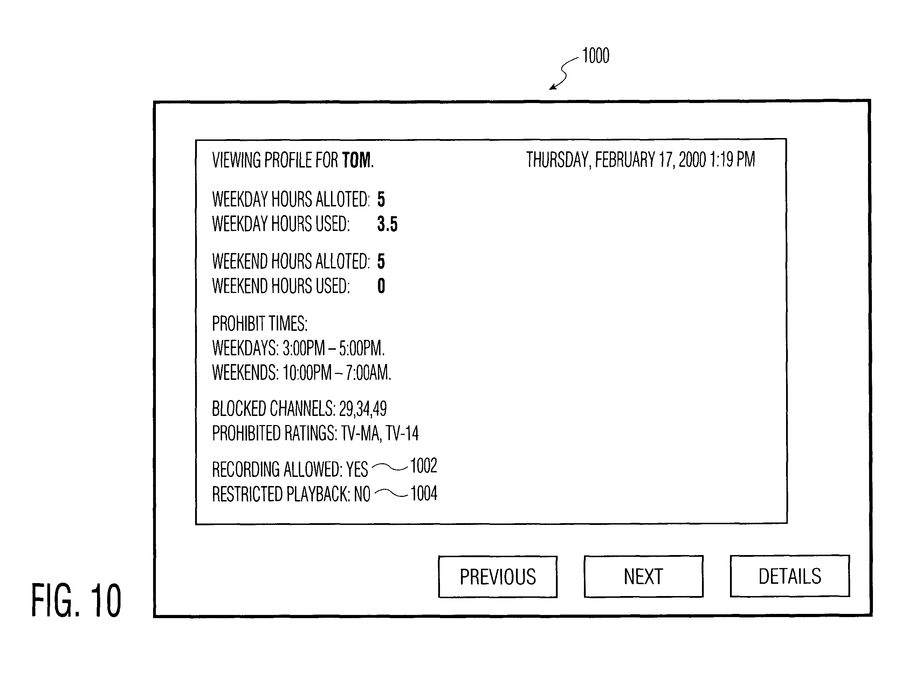

With respect to recording and playback of video information on recordable media 202, 802, the privilege is also controllable by the system administrator through further entries as part of the user's privileges. Referring now to Figure 10, a viewing profile screen 1000 according another exemplary embodiment of the present invention is shown. The viewing profile screen of Figure 10 is similar to the screen shown in Figure 4 with the addition of RECORDING ALLOWED entry 1002 and RESTRICTED PLAYBACK entry 1004. If a user is allowed to record programs complying with the other privileges set forth by the system administrator entry 1002 will be set to YES. The user may also be permitted unrestricted playback of content recorded by others. In this case entry 1004 will be set to YES. Even if playback is not restricted, the user must still comply with the other parameters set forth by the system administrator such as viewing time allotments, time prohibitions, etc. On the other hand, if the system administrator invokes restricted playback, programs recorded by other users will not be available to the current user even if the current user meets all other viewing parameters.

While this invention has been described with reference to specific embodiments, it is not limited thereto. Accordingly, the appended claims should be construed to encompass not only those forms and embodiments of the invention specifically described above, but to such other forms and embodiments as may be devised by those skilled in the art without departing from its scope as defined by the appended claims.

## Claims

1. A system for controlling and monitoring usage of a television receiver, comprising:
a tuner for receiving and demodulating a television signal;
a video processor, including an on-screen display process, coupled to the tuner for receiving the demodulated television signal from the tuner and generating video images for display on a video display device;
an interface circuit for receiving a command signal from a user;
a controller coupled to the tuner, the video processor, and the interface circuit for controlling the video processor and monitoring usage of the television by a plurality of users, the controller comprising:
means for specifying one user of the plurality of users;
means for specifying a viewing profile for the one user, the viewing profile including at least one viewing limit;
means for receiving a request to use the television from the one user; and
means for comparing the requested usage to the specified viewing limits to prevent the one user from using the television if the requested usage is in excess any of the specified viewing limits for the one user.

2. A system according to claim 1, further comprising a recording medium coupled to the controller and the tuner for recording television signals, and the means for specifying the viewing profile includes means for specifying whether the one user is allowed to record television signals on the recording medium.

3. A system according to claim 2. wherein the recording medium non-removable and is one of a magnetic storage medium, a memory, and an optical storage medium.

4. A system according to claim 3, wherein the recording medium is located remote from the television receiver and is coupled to the controller and the tuner through a global communication network.

5. A system according to claim 1, wherein the controller is coupled to the video processor to generate information for display on the video display device using the on-screen display process of the video processor.

6. A system according to claim 5, wherein:
the controller further comprises, means for monitoring the one user's use of the television receiver and for generating a viewing summary describing that use; and
the displayed information includes at least one of the viewing profile and the viewing summary associated with the one user.

7. A system according to claim 6, wherein:
the viewing profile includes at least one of i) a viewing time allotment, ii) an elapsed viewing time, iii) a prohibited viewing time, iv) a prohibited channel, and v) a prohibited rating.

8. A system according to claim 7, wherein the viewing profile spans a predetermined time period.

9. A system according to claim 8, wherein the predetermined time period is one of i) a current day, ii) a day of the week, iii) a predetermined portion of a week, and iv) a week.

10. A system according to claim 6, wherein the viewing summary includes a summary of programs viewed by the one user, including a date an elapsed time of a program viewed by the user, and at least one of i) a channel designation, ii) a program title, and iii) a program rating of the program.

11. A system according to claim 10, wherein the means for generating the viewing summary generates a summary for a program only when the elapsed time for that program exceeds a predetermined amount of time.

12. A method for controlling and monitoring television usage, comprising the steps of:
providing an account for a user;
establishing a time limit for television viewing for the user;
determining an elapsed viewing time for the user; and
prohibiting television usage if the elapsed viewing time exceeds the time limit.

13. A method according to claim 12, wherein the time limit and elapsed viewing time are stored in a storage medium.

14. A method according to claim 13, wherein the storage medium is non-volatile.

15. A method according to claim 12, further comprising the steps of:
receiving at least one of i) a channel designation and ii) a program designation that the viewer is prohibited from viewing;
determining if a program or channel corresponding to the at least one channel designation and program designation is selected by the user; and
prohibiting viewing by the user based on the determination.

16. A method according to claim 12, further comprising the steps of:
receiving at least one time period in which the viewer is prohibited from viewing;
determining if a current time is within the at least one time period; and
prohibiting viewing by the user based on the determination.

17. A method according to claim 12, further comprising the steps of:
receiving at least one program rating category which the viewer is prohibited from viewing;
determining if a rating of a current program one of matches and exceeds the at least one program rating; and
prohibiting viewing of the current program based on the determination.

18. A method according to claim 17, further comprising the steps of:
receiving a program guide; and
assigning a visual attribute to a respective program listed in the program guide if the rating of the respective program one of matches and exceeds the program rating category established for the one user.

19. A method according to claim 18, wherein the visual attribute is a color.

20. A method according to claim 12, further comprising the steps of:
providing recording privileges for the user based on at least one of i) a program rating category, ii) a prohibited program, iii) a prohibited time period, iv) a prohibited channel, and v) a viewing time allowance; and
receiving a request to record a program;
comparing parameters of the requested program to the provided recording privileges and recording the program if the parameters are consistent with the provided recording privileges.

21. A method according to claim 20, further comprising the step of:
receiving a request from the one user to view the recorded program;
comparing parameters of the recorded program to the viewer profile for the one user and allowing the one user to view the recorded program if the parameters are consistent with the viewer profile.

22. A method according to claim 12, further comprising the step of requesting a password and comparing the password to a stored password and prohibiting television usage if the password does not match the stored password.

23. A method according to claim 12, further comprising the step of requesting a biometric identifier and comparing the biometric identifier to stored data representing the biometric identifier and prohibiting television usage if the biometric identifier does not match the stored data.

24. A method for controlling and monitoring usage of a television receiver by a user, comprising the steps of:
establishing a respective rating parameter for the user;
establishing a respective prohibited time period parameter for television viewing by the user;
establishing a respective time limit parameter for television viewing by the user;
establishing a respective prohibited channel selection parameter for the user; and
comparing the use of the television receiver to the established parameters and selectively blocking such use if any one of the parameters is exceeded.

25. A method according to claim 24, further comprising the steps of:
assigning a respective password to the user;
accepting a further password input by the user;
determining if the assigned password matches the further password;
prohibiting viewing if the further password does not match the assigned password; and
loading parameters associated with the user if the further password matches the assigned password.
